# EUROPÄISCHE PATENTANMELDUNG

(11) **EP 2 339 374 A2**
(43) Veröffentlichungstag der Anmeldung: **29.06.2011**
(21) Anmeldenummer: 10192353.0
(22) Anmeldetag: 24.11.2010
(51) Int. Cl.: G01S 15/10, G01S 15/93, G01S 13/93

(54) **Verfahren zur Objekterfassung und Wandleranordnung hierfür**

(30) Priorität: 15.12.2009 DE 102009054663
(71) Anmelder: Robert Bosch GmbH, 70442 Stuttgart (DE)
(72) Erfinder: Karl, Matthias, 76275 Ettlingen (DE)

(57) **Zusammenfassung**

Die Erfindung betrifft ein Verfahren zur individuellen Erfassung von Objekten in einer Umgebung eines Fahrzeugs. Das Verfahren umfasst: Absenden von mehreren Sendepulsen mittels mehrerer Wandler in die Umgebung; Empfangen der von der Umgebung reflektierten Sendepulse mittels der mehreren Wandler als Empfangspulse; und einzelne Erfassung von Objekten innerhalb der Umgebung anhand von Reflexionskomponenten in den Empfangspulsen, die jeweils von einem der Objekte stammen. Die Objekte werden anhand der Reflexionskomponenten von einander unterschieden. Das Empfangen und das Absenden werden mit Ausrichtungen vorgesehen, die sich in Richtung einer Fahrebenenormalen einer Fahrebene des Fahrzeugs unterscheiden. Objektelemente der Objekte in der Umgebung werden erfasst, wobei die Umgebung mit einer Auflösung erfasst wird, die in Richtung der Fahrebenenormalen mehrere Zonen voneinander unterscheidet. Das Verfahren bietet somit eine dreidimensionale Auflösung, wobei Objekte als zusammengehörige Objektelemente in einzelnen Zonen erfasst werden.

Die Erfindung betrifft ferner eine Anordnung von Wandlern, die zur Abgabe und zum Empfang von Ultraschallpulsen eingerichtet sind. Die Anordnung ist zur Befestigung an ein Fahrzeug mit einer Fahrebene vorgesehen, wobei die Wandler aufgrund der Anordnung Sende- und Empfangsausrichtungen aufweisen, die sich in Richtung einer Fahrebenenormalen der Fahrebene unterscheiden. Dies ermöglicht die dreidimensionale Auflösung.

## Beschreibung

### Technisches Gebiet

Die Erfindung betrifft eine Umfelderkennung für Fahrzeuge, insbesondere mittels Ultraschall. Die Erfindung betriff insbesondere eine objektbezogene Umfelderkennung und Darstellung.

### Stand der Technik

Es ist bekannt, Wandler an Außenseiten von Fahrzeugen zu befestigen, mittels dieser Wandler Ultraschallpulse in die Umgebung abzusenden und anhand der reflektierten Schallwellen auf Objekte in der Umgebung zu schließen.

Bislang wird mittels an verschiedenen Stellen des Fahrzeugs vorgesehenen Wandlern ermittelt, ob in der Fahrtrichtung, die der Ausrichtung des Wandlers entspricht, Hindernisse bzw. Objekte liegen, oder nicht. So kann beispielsweise ein sich von rechts näherndes Objekt unterschieden werden von einem Objekt, das sich von links auf ein Bezugsfahrzeug zubewegt; gleichermaßen gilt es für Objekte, die sich von hinten oder von vorne dem Fahrzeug nähern.

Die im Stand der Technik vorgesehen Verfahren sind jedoch reduziert auf Informationen, die sensorbezogen sind und angeben, ob ein oder mehrere Objekte in der Reichweite und innerhalb der Ausrichtung eines bestimmten Wandlers liegen, oder nicht, ohne jedoch Anzahl oder Art von Objekten zu unterscheiden. Wird daher gemäß dem Stand der Technik nur eine Reflektion (oder auch mehrere) erfasst, so wird eine allgemeine Information ausgegeben, gemäß der nach sich innerhalb des Empfangsbereichs eines Wandlers Hindernisse befinden, ohne weitere Angaben zu machen.

Zum einen bietet die auf die Reichweite eines Wandlers bezogene Auswertung nur beschränkte Information über Objektanordnungen in der Umgebung. Zum anderen sind Umfelderfassungen gemäß dem Stand der Technik auf eine Fahrtrichtung bezogen und geben daher lediglich Auskunft darüber, ob ein Objekt bei Beibehaltung einer bestimmten Fahrtrichtung getroffen würde, oder nicht.

Es ist daher eine Aufgabe der Erfindung, ein Verfahren und eine Vorrichtung vorzusehen, mit dem sich das Umfeld eines Fahrzeugs ultraschallbasiert präzise erfassen lässt.

### Offenbarung der Erfindung

Diese Aufgabe wird gelöst durch das Verfahren in Anspruch 1 sowie durch die Anordnung gemäß Anspruch 9.

Das der Erfindung zu Grunde liegende Konzept ist es, Objekte in einer Fahrtumgebung spezifischer mittels Ultraschall zu erfassen, indem nicht nur in einer Ebene, sondern in verschiedenen Höhen bezogen auf die Fahrebene des Fahrzeugs Objektdaten erfasst werden. Daher betrifft die Erfindung insbesondere eine ultraschallbasierte Erfassung, bei der eine Vielzahl von Sensoren sich nicht nur in einer Ebene parallel zur Fahrebene erstrecken (und den gleichen Azimutalwinkel aufweisen), sondern es werden gezielt Ultraschall-Reflektionsmessungen mit verschiedenen (azimutalen) Ausrichtungen durchgeführt, die sich in Richtung der Fahrebenenormalen (d.h. Senkrechte zur Fahrebene) unterscheiden. Als Fahrebene des Fahrzeugs wird hierbei die Ebene bezeichnet, in der die vier Punkte liegen, welche die Kontaktpunkte zwischen den Rädern des Fahrzeugs und dem Untergrund darstellen.

Ein weiterer Aspekt der Erfindung ist eine Objektklassifizierung, die durch die zusätzlichen Daten ermöglicht wird. Hierbei wird ein Objekt durch die unterschiedlichen Ausrichtungen in mindestens zwei unterschiedlichen Höhen abgetastet, so dass sich über die Ausdehnung bzw. die akustischen Eigenschaften des Objekts deutlich genauere Angaben machen lassen, als im Vergleich zum Stand der Technik, bei dem lediglich erfasst wurde, dass innerhalb eines Wandlererfassungsbereichs Reflektionen vorliegen, die auf Hindernisse schließen lassen. Insbesondere Objekterfassungsdaten, die sich in Richtung der Fahrebenenormalen unterscheiden, jedoch im Wesentlichen den gleichen (zweidimensionalen) Ort entsprechen, ermöglichen es, einzelne erfasste Objektelemente durch Vergleich ihrer per Ultraschall erfassten Eigenschaften zueinander zuzuordnen und aus der Ähnlichkeit der einzelnen Objektelemente darauf zu schlie-βen, dass diese dem selben Objekt angehören. Dadurch wird eine Auflösung der Objekte in einzelne Objektelemente geschaffen, die die Präzision der Umgebungserfassung deutlich erhöht. Darüber hinaus lassen sich deutlich spezifischere Aussagen über die Objekte treffen. Die einzelnen Daten, die zu den Objektelementen erfasst wurden, lassen sich über eine Vielzahl von physikalischen Größen korrelieren, beispielsweise Bewegung, Entfernung, Ausrichtung, Signalstärke, Laufzeit oder ähnliches, so dass mittels einer einzigen Ultraschallmessung zahlreiche Daten vorliegen, mit denen die Objektelemente miteinander korreliert werden können und auf Grund dieser Korrelation entschieden werden kann, ob die Objektelemente demjenigen Objekt angehören, oder nicht. Darüber hinaus lassen sich durch die erhöhte Präzision die Objekte räumlich besser voneinander trennen, so dass die erhöhte Auflösung der Umgebungserfassung zu einer präziseren Darstellung der Umgebung hinsichtlich Art und Ort der Objekte führt. Im Vergleich zu der bereits bekannten zweidimensionalen Auflösung ermöglicht die dreidimensionale Auflösung deutlich präzisere und signifikantere Angaben hinsichtlich der Umgebung, selbst wenn die gleiche Anzahl von Wandlern wie sie im zweidimensionalen Fall verwendet wird. Durch die zusätzliche Auflösung in Richtung der Fahrebenenormalen geben sich auch bei einer begrenzten Anzahl an Wandlern präzise Darstellungen der Objekte. Die zusätzliche Auflösung in Richtung der Fahrebenenormalen ermöglicht eine präzisere Objekterfassung, obwohl bei der gleichen Anzahl an Wandlern nur ein Anteil aller Wandler eine Auflösung parallel zur Fahrebene bietet.

Daher sieht das erfindungsgemäße Verfahren zur individuellen Erfassung von Objekten in einer Umgebung eines Fahrzeugs vor, dass zunächst mehrere Sendepulse mittels mehrerer Wandler in die Umgebung abgesendet werden, und diese als Empfangspulse nach der Transmission und Reflektion durch die Umgebung empfangen werden. Insbesondere anhand der Reflektion an Objekten ergeben sich Empfangspulse, insbesondere Reflektionskomponenten innerhalb der Empfangspulse, die durch die einzelnen Reflektionen an den Objekten vorgesehen werden. Ein Empfangspuls ist somit nicht nur einem einzelnen Objekt zugeordnet, sondern der Empfangspuls wird anhand von Reflektionskomponenten untersucht, die der Reflektion eines Sendepulses an einem Objekt zugeordnet sind. Insbesondere bei der Verwendung von mehreren Sendepulsen gleichzeitig und bei mehreren Objekten ergeben sich somit eine Vielzahl von Reflektionskomponenten innerhalb eines Empfangspulses. Um die erfindungsgemäße dreidimensionale Auflösung vorsehen zu können werden die Schritte des Empfangs und des Absendens mit Ausrichtungen vorgesehen, die den Wandler betreffen. Insbesondere betrifft die Ausrichtung eine Hauptachse der Richtcharakteristik der Wandler, die beim Empfangen und beim Senden auftritt. Zur Auflösung in Richtung der Fahrebenenormalen unterscheiden sich die Ausrichtungen in Richtung der Fahrebenenormalen der Fahrebene des Fahrzeugs. Bezogen auf das übliche Gravitationssystem entspricht die Fahrebenenormale im Wesentlichen einer vertikalen Richtung, senkrecht zur Horizontalen und entlang der Wirkungsrichtung der Gravitation.

Die einzelnen Objektelemente der Objekte in der Umgebung werden erfindungsgemäß erfasst, vorzugsweise durch Auswerten der einzelnen Reflexionskomponenten. Die Objektelemente werden anhand der Reflexionskomponenten unterschieden. Ein Objekt kann durch ein oder mehrere Objektelemente vorgesehen sein, wobei die einzelnen Objektelemente gemäß der Auflösung bei der Objekterfassung unterteilt werden, oder anhand der Reflexionskomponenten innerhalb entsprechender Empfangspulse unterschieden werden können. Dadurch, dass sich die Ausrichtungen in Richtung der Fahrebenenormalen unterscheiden, ergibt sich eine Auflösung in Richtung der Höhe, wobei die Erfassung für mehrere Zonen vorgesehen wird, in die die Umgebung eingeteilt wird, und auf Grund der Auflösung in Richtung der Fahrebenenormalen mehrere Zonen voneinander unterscheidet. Für unterschiedliche Höhen oder Azimutalwinkel ergeben sich für die Auflösung daher mehrere verschiedene Zonen, mindestens jedoch zwei, um zusätzliche Höheninformation zu erlangen. Obwohl sich ein Fahrzeug nur entlang der Fahrebene bewegen kann und somit eine zweidimensionale Auflösung zunächst ausreichend erscheint, ermöglicht die Auflösung in die dritte Dimension eine präzisere Objektzuordnung bzw. Objekterfassung, da mehr Information über die Umgebung vorgesehen wird.

Gemäß einer Ausführung der Erfindung wird die Ausrichtung der Wandler in Richtung der Fahrebenenormalen unterschieden, dass diese entweder in Richtung der Fahrebenenormalen zueinander versetzt sind. Da die Ausrichtung des Wandlers von der Position des Wandlers abhängt, ergibt sich für jeden Wandler ein Bezugspunkt, der im Wesentlichen den Ort des Wandlers oder des Wandlermembrans darstellt. Die Ausrichtung ist somit nicht nur ein Richtungsvektor, sondern umfasst eine dreidimensionale Ortsdarstellung einschließlich eines Bezugspunkts, von dem aus die Richtkeule des Wandlers die richtungsabhängige Empfindlichkeit darstellt. Der Bezugspunkt des Wandlers ist daher die Höhe entlang der Fahrebenenormalen, vorzugsweise einschließlich der Information der weiteren beiden Raumdimensionen. Alternativ oder in Kombination hierzu können die Ausrichtungen der Wandler in Richtung der Fahrebenenormalen zueinander geneigt sein. Daher sind die Ausrichtungen der Wandler bzw. die Ausrichtungen der jeweiligen Richtcharakteristika gemäß einem Azimutalwinkel zueinander geneigt, soweit sich der Azimutalwinkel auf die Fahrebene bezieht.

Die Sendepulse werden von der Außenseite des Fahrzeugs aus gesendet und von dieser Außenseite des Fahrzeugs auch empfangen. Der Ort des Sendens bzw. Empfangens ist der Ort der Wandler, so dass sich die Wandler bei diesem Verfahren an der Außenseite des Fahrzeugs befinden. Daher sind die Wandler in verschiedenen Höhen des Fahrzeugs angeordnet, d.h. zueinander in Richtung der Fahrebenenormalen versetzt. Eine unterschiedliche Neigung zwischen den Wandlern kann vorgesehen werden, indem diese unterschiedliche Ausrichtungen in Bezug zu der Außenseite des Fahrzeugs haben, wobei sich die Neigung in Richtung der Fahrebenenormalen unterscheidet. Dadurch sind Ort und Ausrichtung des Sendens und des Empfangs definiert, da die Sende- oder Empfangsausrichtung unmittelbar mit der Ausrichtung des Wandlers verknüpft ist.

Zur dreidimensionalen Darstellung ist die Umgebung in drei Raumdimensionen aufgelöst. Durch diese Auflösung ergeben sich mehrere dreidimensionale Zonen. Vorzugsweise bilden die drei Raumdimensionen ein kartesisches Koordinatensystem. Eine der Raumdimensionen ist durch die Fahrebenenormale vorgesehen, d.h. beispielsweise die z-Achse des Koordinatensystems. Winkel zu dieser z-Achse werden daher als Azimutalwinkel bezeichnet. Für jede der dreidimensionalen Zonen werden dort vorliegende Objektelemente (aller in der Umgebung vorgesehenen Objektelementen) erfasst. Die Auflösung der Umgebung in drei Raumdimensionen umfasst daher eine Auflösung in Richtung der Fahrebenenormalen, so dass die Zonen auch in Richtung der Fahrebenenormalen unterschieden werden.

Im Folgenden ist die Klassifizierung oder Einteilung der Objektelemente zur Zuordnung von Objekten beschrieben. Erfindungsgemäß werden die Objektelemente der Umgebung erfasst, indem Objektklassen der Objektelemente erfasst werden, in die die Objekte gemäß unterschiedlicher Objektarten eingeteilt werden. Stattdessen oder vorzugsweise in Kombination hiermit wird ein Genauigkeitswert für die Objektelemente, d.h. für die einzelnen eingeteilten Objektelemente erfasst, wobei der Genauigkeitswert die Schätzergüte wiedergibt. Somit werden pro Zone erfasste Objektelemente bzw. pro Zone erfasstes Objektelement mit einem Genauigkeitswert versehen, der die Wahrscheinlichkeit angibt, dass das Objektelement auch tatsächlich dort vorliegt und somit die Erfassung zutreffend ist. Diese Wahrscheinlichkeit hängt beispielsweise von der Signalstärke ab, bzw. kann anhand der Signalstärke vorgesehen werden, wobei hohe Signalstärken eine hohe Schätzergüte wiedergeben, und geringe Signalstärken eine geringe Schätzergüte wiedergeben. Mit einer steigenden Signalstärke des Empfangspulses steigt somit auf die Schätzergüte an, wobei die Verknüpfung zwischen Signalstärke und Schätzergüter bei einer besonders einfachen Ausführungsform proportional vorgesehen werden kann oder grundsätzlich mittels einer monoton oder vorzugsweise streng monoton steigenden Funktion, die eine Signalstärke einer Schätzergüte zuordnet. Insbesondere werden Objektelemente erfasst, in dem physikalische Eigenschaften der Objektelemente erfasst werden. Diese physikalischen Eigenschaften können auch zur oben beschriebenen Objektklassifizierung und zur Erfassung des Genauigkeitswerts bzw. der Schätzergüte herangezogen werden. Anhand der physikalischen Eigenschaften einzelner Objektelemente können diese miteinander verglichen werden und, bei großer Ähnlichkeit, miteinander verknüpft werden, um ein Objekt auszubilden. Objektelemente mit verschiedenen physikalischen Eigenschaften werden daher verschiedenen Objekten zugeordnet, und Objektelemente mit ähnlichen physikalischen Eigenschaften werden dem gleichen Weg zugeordnet, vorzugsweise soweit deren Position ein zusammenhängendes Objekt oder ein bestimmtes Objektmuster wiedergibt.

Die oben beschriebene Signalstärke, aus der die Schätzergüte bestimmt wird, welche wiederum zur Erfassung der Ähnlichkeit von Objektelementen gesendet werden kann, kann auch unmittelbar herangezogen werden, um bei ähnlichen Signalstärken verschiedener Objektelemente auf das gleiche Objekt zu schließen, und bei unterschiedlichen Signalstärken die Objektelemente auf unterschiedliche Objekte zu schließen.

Gemäß einem Aspekt dieser Ausführungsform werden physikalische Eigenschaften der Objektelemente erfasst, um durch deren Vergleich auf die Ähnlichkeit von Objektelementen zu schließen und somit dem gleichen Objekt zuzuordnen. Die physikalischen Eigenschaften können unmittelbar akustische Eigenschaften sein. Beispielsweise können diese durch Ermittlung von Eigenschaften der Empfangspulse selbst ergeben. Beispiele hierfür sind die Signalstärke des Empfangspulses, eine Frequenzselektivität, eine Reflektion, d.h. eine Verformung des Frequenzverlaufs des Sendepulses bei der Reflektion, um als im Frequenzverlauf verformter Empfangspuls empfangen zu werden, Dopplerverschiebung des Empfangspulses oder auch Periodendauerabweichung des Empfangspulses, die beide Resultat einer Bewegung des reflektierenden Gegenstands (= Objektelement) sind, oder auch die Laufzeit, die sich zwischen Sendepuls und Empfangspuls ergibt. Die Periodendauerabweichung betrifft eine Länge des Empfangspulses, d.h. bezogen auf die Hüllkurve des Empfangspulses, verglichen mit der Periodendauer des Sendepulses. Bei einer Bewegung des Objektelements bzw. des Objekts auf den Wandler zu verkürzt sich die Periodendauer auf Grund der Dopplerverschiebung, und verlängert sich, wenn sich das Objekt von dem Wandler wegbewegt. Der Signalpuls wird durch die Reflexion an ein Objekt, das sich relativ zueinander bewegt, gemäß der Relativbewegung gestaucht oder gestreckt.

Neben den oben beschriebenen unvermittelbar akustischen Eigenschaften, die zur Erfassung der Ähnlichkeit von Objektelementen verwendet werden, können Eigenschaften des Objektelements vorgesehen werden, die sich durch Auswertung des Empfangsimpulses ergeben. Derartige Eigenschaften umfassen beispielsweise den Ort des Objektelements, das sich beispielsweise durch Laufzeitmessungen ergibt. Ferner sind derartige Eigenschaften, die sich durch Auswertung ergeben Geschwindigkeit, Beschleunigung und/oder Bewegungsrichtung des Objektelements. Geschwindigkeit, Beschleunigung und Bewegungsrichtung können beispielsweise erfasst werden anhand der Dopplerverschiebung oder anhand von aufeinander folgenden Ortsmessungen. Weitere Eigenschaften des Objektelements, die sich durch Auswertungen ergeben, können durch den Wandler vorgesehen sein, mit dem das Objekt bzw. das Objektelement erfasst wurde. Mit der Identifikation des zugehörigen Wandlers kann unmittelbar auf dessen Richtcharakteristik geschlossen werden, so dass, wenn ein Objektelement von dem Wandler erfasst wurde, damit auch erfasst wurde, dass das Objektelement innerhalb des Sensorbereichs des Wandlers vorliegt. Durch verschiedene Ausrichtungen lässt sich die Umgebung in Abschnitte aufteilen, so dass, wenn der zugehörige Wandler erfasst wurde, auch eine Ortsbestimmung des Objektelements vorgesehen wird, in dem angenommen wird, dass sich das Objektelement innerhalb von dem Erfassungsbereich des Wandlers aufhält.

In gleicher Weise kann dadurch der Ort des Wandlers als Eigenschaft des Objektelements vorgesehen werden, mit dem das Objektelement erfasst wurde. Der Ort des Wandlers bezieht sich auf einen Ort relativ zum Fahrzeug, beispielsweise an einer Außenseite des Fahrzeugs, beispielsweise an einer Ecke oder an einer bestimmten Seitenfläche. Da der Ort des Wandlers auch den empfindlichen Bereich des Wandlers definiert wird somit auch eine Eigenschaft des Objektelements vorgesehen, wenn ein Objektelement von dem Wandler, der sich an einem bestimmten Ort befindet, erfasst wird. Eine weitere Eigenschaft, die sich durch Auswertungen des Empfangspulses ergibt, ist der Sendezeitpunkt, wenn die Sendepulse nicht gleichzeitig sondern zueinander versetzt von den verschiedenen Wandlern abgegeben werden. Auf Grund des Sendezeitpunkts kann auf den Wandler geschlossen werden, da diese auf Grund der Abgabesequenz zeitlich kodiert sind bzw. unterscheidbar sind. Dies wird vorgesehen, wenn mehrere Wandler die Sendepulse sequenziell abgeben, so dass allein auf Grund des Empfangszeitpunktes auf die Identität und somit auf den Ort des Wandlers geschlossen werden kann.

In einer weiteren Klassifizierungs- bzw. Einteilungsvariante wird vorgesehen, dass die Ähnlichkeit von Objektelementen anhand einer Objektklassifikation vorgesehen wird. Während oben beschrieben ist, Objektelementen bestimmte Eigenschaften bzw. Objektklassen zuzuordnen, in dem unmittelbar akustische Eigenschaften oder Eigenschaften, die sich durch Auswertung des Empfangspulses ergeben, verglichen werden, werden hier Objektarten anhand physikalischer Eigenschaften eingeteilt. Objektelemente mit ähnlichen physikalischen Eigenschaften werden in die selbe Objektklasse eingeteilt, und Objektelemente mit verschiedenen physikalischen Eigenschaften werden in unterschiedliche Objektklassen eingeteilt. Den unmittelbar akustischen Eigenschaften und den durch Auswertung vorgesehenen Eigenschaften können Klassifizierungen oder Objektarten zugeordnet werden, beispielsweise bei der Erfassung einer Dopplerverschiebung kann darauf geschlossen werden, dass das Objektelement der Objektklasse "sich bewegendes Fahrzeug" zugehört. In gleicher Weise kann auf Grund der Signalstärke oder der Anzahl der Echos erfasst werden, ob die Objektart ,,Mauer" zutreffend ist, oder ob eine Objektklasse zutreffend ist, die eine Vielzahl von verteilten Objektelementen wiedergibt, beispielsweise eine Vielzahl von Stangen.

Das Verfahren umfasst folglich auch die Feststellung einer Ähnlichkeit der Objektelemente anhand der Eigenschaften oder anhand der Objektarten oder Objektklassen, die für die Objektelemente erfasst wurden, wobei mehrere Objektelemente auch miteinander korreliert werden können oder gemeinschaftlich eine Ähnlichkeit mit einem Objektmuster vorsehen können. Um die Verarbeitung zu vereinfachen werden mehrere erfasste Objektelemente zu einem Objekt zusammengefasst, so dass bei einer weiteren Weiterverarbeitung oder Darstellung der Umgebung lediglich das zusammengesetzte Objekt, nicht jedoch die Objektelemente wiedergegeben werden oder verarbeitet werden müssen.

Grundsätzlich können die akustischen Eigenschaften Momentanaufnahmen der Umgebung sein, wobei auf Grund der Momentanaufnahmen die Zuordnung zu Objekten erfolgt. Gleichermaßen können auch mehrere, aufeinander folgende Momentanaufnahmen gemäß der Erfindung durchgeführt werden, die zu aufeinander folgenden Objekterfassungen führen, beispielsweise um zu erfassen, dass ein Objektelement gemäß des so erfassten Verlaufs eine ähnliche Bewegung ausführt, wie ein anderes Objektelement. Auf Grund dieser Ähnlichkeit können die sich ähnlich bewegenden Objektelemente zu einem sich bewegenden Objekt zugeordnet werden. Diese bewegungsgestützte Erfassung beruht auf der wiederholten Umfassung der Umgebung und der dort vorliegenden Objektelemente. Der zeitliche Versatz zwischen den Momentanaufnahmen und die aufeinander folgende Vielzahl der Momentanaufnahmen kann als "Film" betrachtet werden, der sich für die Umgebung ergibt, und der weitere Schlüsse auf die Zuordnung von verschiedenen Objektelementen zu Objekten zulässt. Grundsätzlich gilt hierbei, dass sich unterschiedlich bewegende Objektelemente nicht zu dem gleichen Objekt zuordnen lassen, und sich ähnlich bewegende Objekte, beispielsweise in der gleichen Geschwindigkeit, sich dem gleichen Objekt zuordnen lassen.

Für eine Momentanaufnahme werden daher mehrere Impulse innerhalb eines Zeitfensters abgesandt, wobei das Zeitfenster eine Dauer aufweist, während der sich die Umgebung nur unwesentlich verändert. Daher ist das Zeitfenster einer einzelnen Umgebungserfassung zugeordnet, und die mehreren Impulse dienen der näheren Auflösung der Umgebung. Dadurch wird bei dem Erfassen der Objektelemente die Auflösung als räumliche Auflösung vorgesehen. Um einen ,,Film" zu erzeugen oder eine andere Darstellung, die eine Veränderung in der Umgebung, d.h. eine Veränderung der Objektelemente wiedergibt, wird das Absenden und das Empfangen jeweils für die mehreren Impulse wiederholt. Daher wird das Zeitfenster, in dem die mehreren Impulse zur Momentanerfassung ausgesandt werden, in gewissem zeitlichen Abstand wiederholt, um zeitlich zueinander versetzte Zeitfenster zur Erfassung von Veränderungen in ihrer Umgebung vorzusehen. Die Wiederholung des Empfangs und des Sendens von mehreren Impulsen wird als eine Sequenz von Umgebungserfassungen vorgesehen. Dadurch werden die Objekte mit einer Auflösung erfasst, die einer räumlichen und gleichzeitig zeitlichen Auflösung entspricht. Die zeitliche Auflösung ergibt sich durch die Wiederholung der Zeitfenster und durch den zeitlichen Abstand zwischen den Zeitfenstern, wobei während des zeitlichen Abstands zu erwarten ist, dass sich die Umgebung zumindest leicht ändert (beispielsweise wenn eine Relativbewegung zum Fahrzeug stattfindet), wodurch Bewegungen als "Film" dargestellt werden können.

Gemäß einer weiteren Ausführungsform werden Objektelemente einzelner Zonen zu einem gemeinsamen Objekt zugeordnet anhand ähnlicher Erfassungsmerkmale der Objektelemente. Die Erfassungsmerkmale entsprechen den oben dargestellten Erfassungsmerkmalen oder Objektklassen bzw. Objektarten. Insbesondere umfassen die Erfassungsmerkmale Abstand, Richtung, Laufzeit, Periodendauerabweichung, Dopplerverschiebung, Bewegungsverlauf, Geschwindigkeit, Beschleunigung, Bewegungsrichtung, zugehöriger Sensor bzw. Wandler, mit dem die Objektelemente erfasst wurden, Sendezeit, dem bei sequentiellen Absenden der Sendepulse durch die mehreren Wandler ein bestimmter Wandler oder Wandlerort zugeordnet ist, oder Objektklassifizierung. Anhand dieser Kriterien, die einzeln oder in beliebiger Kombination verwendet werden können, werden Objektelemente miteinander verglichen, und bei einer gewissen Ähnlichkeit zu einem gemeinsamen Objekt vereinigt bzw. diesem zugeordnet. Die Zuordnung kann beispielsweise vorgesehen werden durch einen Schwellwertvergleich, durch Korrelieren oder durch eine gemeinsame Zugehörigkeit oder Ähnlichkeit zu einem vordefinierten Muster einer Objektart. Ein derartiges Muster kann durch typische Wertintervalle wiedergegeben werden, so dass, wenn die Erfassungsmerkmale der Wandler in diese Intervalle jeweils fallen, das Objekt als der Objektart zugehörig angesehen wird. Dadurch wird die Objektart des Objekts bestimmt, wobei das Objekt selbst durch Zusammenführung der Objektelement gemäß dem vorgegebenen Muster vorgesehen wird.

Wie bereits beschrieben basiert das erfindungsgemäße Verfahren auf einer dreidimensionalen Auflösung der Umgebung eines Fahrzeugs, wobei die Auflösung durch Ultraschallwandler vorgesehen wird, die verschiedene Ausrichtungen aufweisen, insbesondere Ausrichtungen, die sich in Richtung der Fahrebenenormalen unterscheiden. Die Auflösung wird durch Zonen vorgesehen, die den Raum vollständig ausfüllen. Die Zonen können daher eine konstante Größe aufweisen. Dies erfordert jedoch einen relativ hohen Bearbeitungsaufwand, ohne dass sich dadurch ein Genauigkeitsvorteil ergeben würde. Daher wird bevorzugt vorgesehen, dass die Auflösung nicht konstant ist und sich mit dem Abstand zum Fahrzeug verkleinert. Grundlage hierfür ist, dass nahe Objekte bzw. Objektelemente grundsätzlich besser räumlich aufgelöst werden können als entfernt gelegene Objektelemente, wobei dies ein Resultat des mit zunehmenden Abstand abnehmenden Signal zu Rauschverhältnis ist. Durch eine derartige Verringerung der Auflösung mit zunehmenden Abstand ergibt sich eine deutliche Vereinfachung bei der Berechnung durch die verringerte Datenmenge, ohne jedoch einen wesentlichen Präzisionsverlust hinnehmen zu müssen.

Alternativ oder in Kombination hierzu wird die Auflösung in Abhängigkeit der Anordnung der Zone zu einem Fahrkorridor nicht konstant vorgesehen. Ein Fahrkorridor kann anhand von Verkehrsmaßnahmen oder anhand von Objekten geschätzt werden, beispielsweise mittels Verarbeitung der Objekte, die mittels Ultraschall erfasst werden, oder durch Bearbeitung von optischen Daten einer fahrzeuggeschützten Kamera, oder einer Kombination hieraus. Insbesondere werden zur Darstellung des Fahrkorridors Videokamerabilder verwendet, die die Verkehrsumgebung und insbesondere Verkehrsmaßnahmen wie Fahrbahnmarkierungen aufnehmen. Ferner kann der Fahrkorridor anhand von Objekten innerhalb der Umgebung, beispielsweise weitere Verkehrsteilnehmer, beispielsweise sich bewegende Fahrzeuge, angepasst werden. Der Fahrkorridor weist Grenzbereiche auf, die den Korridoraußenrand wiedergeben. In diesen Randbereichen ist die Auflösung größer als im Innenbereich des Fahrkorridors oder auch als in Außenbereichen des Fahrkorridors. Die größere Auflösung lässt sich durch die Verkleinerung der Zonen wiedergeben. Der Fahrkorridor selbst kann in zwei Raumdimensionen definiert sein, vorzugsweise in der Fahrebene des Fahrzeugs. Alternativ kann der Fahrkorridor in drei Raumdimensionen definiert sein, wobei zusätzlich Höheninformation hinzugenommen wird, d.h. Information gemäß einer Auflösung in Richtung der Fahrebenenormalen, wobei Objekte bzw. Objektelemente nahe der Fahrebene unterschieden werden von Objekten nahe der Mitte des Fahrzeugs, welche wiederum unterschieden werden von Objekten oder Objektelementen oberhalb des Fahrzeugs bzw. oberhalb der Fahrzeugmitte.

Bei der Zuordnung von Objektelementen zu Objekten kann die Schätzergüte berücksichtigt werden, wobei Objektelemente mit geringer Schätzergüte weniger bei der Zuordnung zu einem Objekt berücksichtigt werden, als Objektelemente mit hoher Schätzergüte. Insbesondere werden bei aufeinander folgenden Momentanaufnahmen vorher ausgeführte Objekterfassungen berücksichtigt, insbesondere bei der Zuordnung der Objektelemente bei nachfolgenden Momentaufnahmen. Die Zuordnung kann auch durch Filterung der zugehörigen erfassten Eigenschaften durchgeführt werden, wobei die Filterung gleichartige, zu einem bestimmten Objekt zugehörige Objektelemente anhand der gleichen physikalischen Eigenschaften passieren lässt, während davon zu unterscheidende, die Objektelementen eines anderen Objekts angehören, ausgefiltert werden.

Ferner werden bei der Zuordnung von mehreren Objektelementen zum gleichen Objekt auf Grund ähnlicher Eigenschaften diese Eigenschaften gemittelt und dem Objekt zugeordnet. Insbesondere können Geschwindigkeiten, die für verschiedene Objektelemente erfasst wurden, die jedoch ähnlich sind und somit dem gleichen Weg zugeordnet werden, beispielsweise gemittelt werden und der Mittelwert wird dem Objekt zugeordnet. Anstatt der Geschwindigkeit können alle oben genannten Eigenschaften (d.h. physikalische Eigenschaften oder sich durch Auswertung der physikalischen Eigenschaften ergebende Eigenschaften) miteinander gemittelt werden, wenn diese als ähnlich betrachtet werden und die zugehörigen Objektelemente dem gleichen Objekt zugeordnet werden. Das so zugeordnete Objekt erhält dann den Mittelwert der Eigenschaften der einzelnen Objektelemente. Vorzugsweise werden bei der Mittelung die einzelnen Eigenschaften gewichtet anhand der Schätzergüte, wobei eine hohe Schätzergüte zu einer starken Berücksichtigung d.h. einer hohen Gewichtung der zugehörigen Eigenschaft bei der Mittelung ergibt, und eine geringe Schätzergüte zu einer geringen Berücksichtigung der Eigenschaft bei der Mittelwertbildung führt. Die Gewichtung kann insbesondere als direkt proportionale Gewichtung vorgesehen werden.

Grundsätzlich wird die Erfindung ferner vorgesehen von einer Anordnung von Wandlern, die zur Abgabe und zum Empfang von Ultraschallpulsen eingerichtet sind, wobei die Anordnung der Wandler vorsieht, dass die Wandler nicht nur in einer Richtung (beispielsweise in die horizontale Richtung) unterschiedlich ausgerichtet sind, sondern auch in eine dazu senkrechte Richtung (d.h. vertikale Richtung), die sich jedoch von der Ausbreitungsrichtung der Wandler unterscheidet. Hierzu kann die Anordnung zur Befestigung an ein Fahrzeug eingerichtet sein, das nicht Teil der Anordnung ist. Durch die Befestigung an ein Fahrzeug wird eine Fahrebene für das Fahrzeug definiert, die auch für die Anordnung gilt, obwohl das Fahrzeug nicht Teil der Anordnung ist. Die Anordnung kann anhand der Fahrebene in ihrer Ausrichtung definiert sein, in dem sich die Sende- und Empfangsausrichtungen der Wandler in Richtung einer Fahrebenenormalen der Fahrebene unterscheiden. Die Anordnung der Wandler kann ferner ohne Bezugnahme auf ein Fahrzeug definiert werden, wobei die Wandler in zwei unterschiedliche Richtungen unterschiedlich ausgerichtet sind, wobei beide Richtungen senkrecht oder zumindest geneigt zu einer Hauptausbreitungsrichtung der Wandler sind, die die Hauptausbreitungsrichtung (d.h. gemittelte Ausbreitungsrichtung) von Schallwellen sind, die von den Wandlern abgestrahlt werden. Durch diese Anordnung der Wandler ergibt sich automatisch eine dreidimensionale Auflösung, da sich die Ausrichtungen der Wandler in einem tatsächlichen Raumwinkel (horizontalen Winkel und Azimutalwinkel ungleich null) unterscheiden.

Die Unterscheidung kann, wie oben bereits anhand des Verfahrens beschrieben, entweder durch Versetzung, durch unterschiedliche Neigung oder durch beides vorgesehen sein. Die Wandler können durch die Anordnung Richtung der Fahrebenenormalen zueinander versetzt sein, oder die Wandler können durch Anordnung mit unterschiedlichen Ausrichtungswinkeln zur Fahrebenenormalen geneigt sein. Ferner können die Wandler in Richtung der Fahrebenenormalen zueinander versetzt sein, als auch mit unterschiedlichen Ausrichtungswinkeln zur Fahrebenenormalen geneigt sein. Anstatt einer Definition anhand von Fahrebenenormalen kann vorgesehen sein, dass die Anordnung der Wandler ein Versatz oder eine Neigung (oder beides) in eine Richtung vorsieht, die senkrecht zu einer weiteren Richtung ist, wobei beide Richtungen jedoch senkrecht zur Hauptausbreitungsrichtung der Schallwellen sind. Beide Richtungen geben somit einem Versatz oder einer Neigung in zwei Richtungen wieder, die zusammen mit einer Tiefeninformation einen dreidimensionalen Raum aufspannen.

In besonders bevorzugten Ausführungsformen des Verfahrens oder der Anordnung wird in Richtung der Fahrebenenormalen in mindestens drei Zonen unterschieden, die sich aneinander anfügen, wobei eine erste Zone für die Überfahrbarkeit durch das Fahrzeug wiedergibt, die darüber liegende Zone die Passierbarkeit wiedergibt, und eine darüber liegende Zone die Unterfahrbarkeit wiedergibt. Daher werden für die erstgenannte Zone lediglich Objektelemente unterhalb einer maximalen Höhe über der Fahrebene betrachtet, für die zweit genannte Zone lediglich Objektelemente seitlich der eigenen Fahrspur bzw. des eigenen Fahrkorridors betrachtet, und im dritt genannten Bereich werden nur Objekte betrachtet, die oberhalb einer minimalen Höhe über dem Boden vorgesehen sind. Die drei Zonen betreffen daher Objekte, die (a) über dem Fahrzeug vorgesehen sind, (b) vor dem Fahrzeug vorgesehen sind (jedoch zeitlich au-βerhalb des Fahrkorridors) und (c) Objektelemente, die unter dem Fahrzeug selbst vorgesehen sind, jedoch auf Grund der Bodenfreiheit des Fahrzeugs passierbar sind. Anhand dieser Daten lassen sich deutlich präzisere Aussagen über die Passierbarkeit treffen bzw. an die Situation angepasste Maßnahmen treffen (beispielsweise Auslösen von ABS oder Airbag, Einleiten eines Bremsprozesses oder ähnlich).

Gemäß einer bevorzugten Ausführungsform werden die Eigenschaften sowie auch die Schätzergüte bzw. der Genauigkeitswert als diskrete Werte angegeben und insbesondere wird die Schätzergüte durch wenige diskrete Werte wiedergegeben, beispielsweise mittels vier Werten, die jedem Objektelement bzw. jeder Zone zugeordnet sind.

Die Erfindung wird ferner vorgesehen von Verfahren, die die Verwendung der oben genannten Anordnung umfassen bzw. die Ausführung des oben beschriebenen Verfahrens umfassen, wobei ferner vorgesehen ist, dass anhand der erfassten Objekte entweder Objektdaten ausgegeben werden zur optischen Darstellung, beim Erfassen von kritischen Daten Warnhinweise ausgegeben werden oder beim Erfassen von kritischen Daten Sicherheitsmaßnahmen ausgeführt werden, wie das Auslösen von Airbags, das Beginnen von Abbremsmanövern, ein Eingriff in die Lenkung oder gegebenenfalls eine Beschleunigung des Fahrzeugs. Die Objekte können dem Fahrer durch eine perspektivische Darstellung der Umgebung wiedergegeben werden, wobei die einzelnen Objekte beispielsweise anhand von einfachen Symbolen wiedergegeben sind, die gemäß den Eigenschaften ausgebildet sind. Alternativ kann die Umgebung durch eine Draufsicht dargestellt sein, oder auch lediglich durch numerische Daten oder ähnliches. Grundsätzlich können die einzelnen Objekte bzw. Objektelemente wiedergegeben werden durch einfache geometrische Formen wie Kugel, Zylinder oder Fläche.

Die erfindungsgemäße Anordnung, die auch im Rahmen des erfindungsgemäßen Verfahrens verwendet wird sieht vor, die Wandler in einer zumindest zweidimensionalen Fläche anzuordnen, die senkrecht bzw. geneigt gegenüber allen Hauptabstrahlrichtungen der Wandler bzw. Hauptempfangsrichtungen der Wandler (definiert durch deren Richtcharakteristik) anzuordnen. Während im Stand der Technik die Wandler in einer Linie angeordnet sind, und alle Richtcharakteristiken in die gleiche bzw. in zueinander parallele Richtungen weisen, sieht die Anordnung vor, die Richtcharakteristiken nicht nur parallel entlang einer Linie zu versetzen (die parallel zu einer Fahrebene ist), sondern entweder zueinander zu neigen in einem Raumwinkel, der sich von einem Winkel unterscheidet, der in einer Ebene verläuft, die parallel zur Fahrebene ist. Anstatt oder in Kombination mit einer unterschiedlichen Anordnung der Wandler selbst können diese eine derartige Neigung aufweisen.

Kurzbeschreibung der Zeichnungen
Figur 1 zeigt eine beispielhafte erfindungsgemäße Anordnung, die auch zur Ausführung des Verfahrens verwendet wird, in Perspektive der Darstellung;
Figur 2 zeigt eine Draufsicht der erfindungsgemäßen Anordnung, die auch zur Ausführung des erfindungsgemäßen Verfahrens verwendet wird, einschließlich einer erfindungsgemäßen Zonenaufteilung.

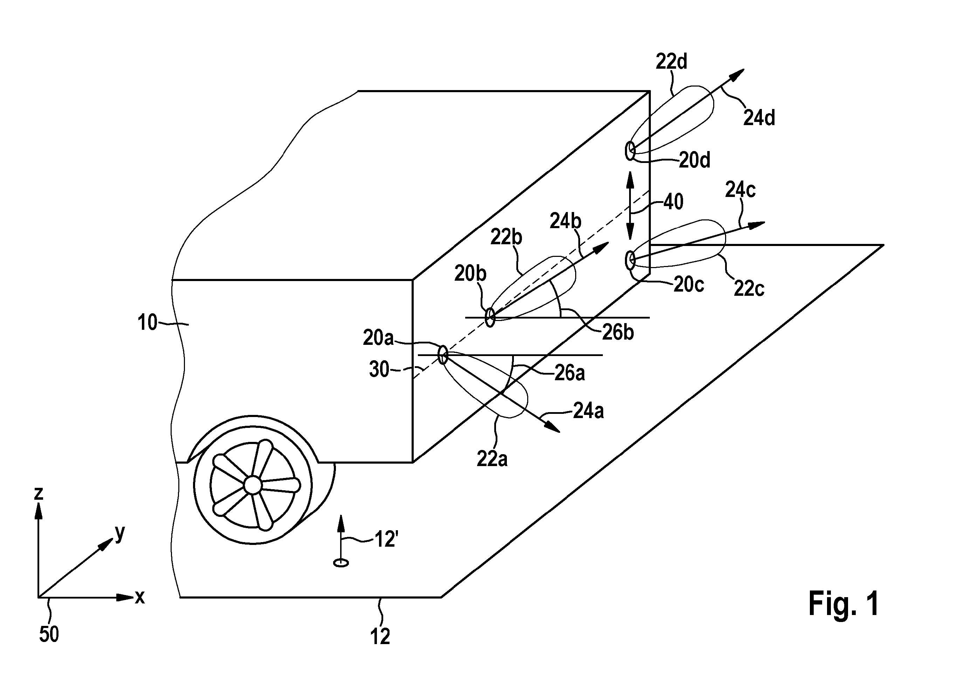

In der Figur 1 ist ein Fahrzeug 10 dargestellt, das auf einer Fahrebene 12 angeordnet ist. Die Figur zeigt ferner schematisch die Anordnung von Wandlern 20a,b,c,d mit den jeweiligen Richtcharakteristika, die vereinfacht in Form ihres Hauptzipfels bzw. ihrer Hauptkeule dargestellt sind. Die Richtcharakteristika 22a-d sind gemäß ihrer Empfindlichkeit bzw. Abstrahl-Signalstärke abhängig vom Winkel dargestellt. Ferner umfasst jede Richtcharakteristik 22a-d eine zugehörige Ausrichtung 24a-d, die die Richtung der maximalen Empfindlichkeit bzw. der maximalen Abstrahlung darstellt. Während die Wandler 22a,b entlang einer Linie 30 angeordnet sind, die parallel zur Fahrebene 12 verläuft, sind die Wandler 20c,d zueinander in einer Richtung 40 versetzt, die senkrecht zur Fahrebene ist, jedoch allgemein geneigt zur Fahrebene verlaufen kann. Der Abstand 40 entspricht einem Versatz, der die dreidimensionale Auflösung entlang der z-Achse ermöglicht. Zudem ist zu erkennen, dass die Hauptrichtung 24c,d zueinander in Richtung der Fahrebenenormalen 12' der Fahrebene 12 versetzt sind. Die Wandler 20c und 20d können zueinander auch in Richtung der Linie 30, d.h. entlang der y-Achse zueinander versetzt sein, oder deren Richtcharakteristika 24c,d können eine zusätzliche Neigung in Richtung der y-Achse aufweisen.

Die Wandler 20a,b ermöglichen ferner eine dreidimensionale Auflösung in Richtung der z-Achse, obwohl diese keinen Versatz in Richtung der z-Achse aufweisen, in dem die Hauptrichtungen 24a,b bzw. deren Richtcharakteristika 22a,b um Winkel 26a,b zur x-Achse (die parallel zur Fahrebene 12 verläuft) unterschiedlich geneigt sind. Die Winkel 26a,b sind lediglich beispielhaft gewählt und können beliebige Ausrichtungen aufweisen, solang die Neigungen zur Fahrebene 12 unterschiedlich sind. In dem zugehörigen kartesischem System 50 spannen die x- und die y-Achse die Fahrebene auf, wobei die z-Achse in die Richtung der Fahrebenenormalen 12' verläuft.

Schließlich sind die Wandler in der Figur 1 aus Gründen der besseren Übersichtlichkeit in der selben Ebene liegend dargestellt. Allgemein kann jedoch die Ebene, d.h. die Rückseite des Fahrzeugs 10 einer gebogenen Fläche entsprechen, so dass alleine auf Grund der Biegung der Fläche, in denen die Wandler angeordnet sind, diese zueinander unterschiedliche Richtcharakteristika aufweisen. Beispielsweise können die Wandler 20c,d eine deshalb unterschiedliche Richtcharakteristika aufweisen, da deren Flächenabschnitt, auf dem diese befestigt sind, gebogen (bzw. gekrümmt) ist und trotz der gleichen relativen Anordnung der jeweiligen Wandler c,d zu dem Untergrund auf Grund der Biegung bzw. Krümmung der Befestigungsfläche diese eine unterschiedliche Ausrichtung aufweisen, die zu unterschiedlichen Hauptrichtungen 24c,d in Richtung der Fahrebenenormalen 12' führt.

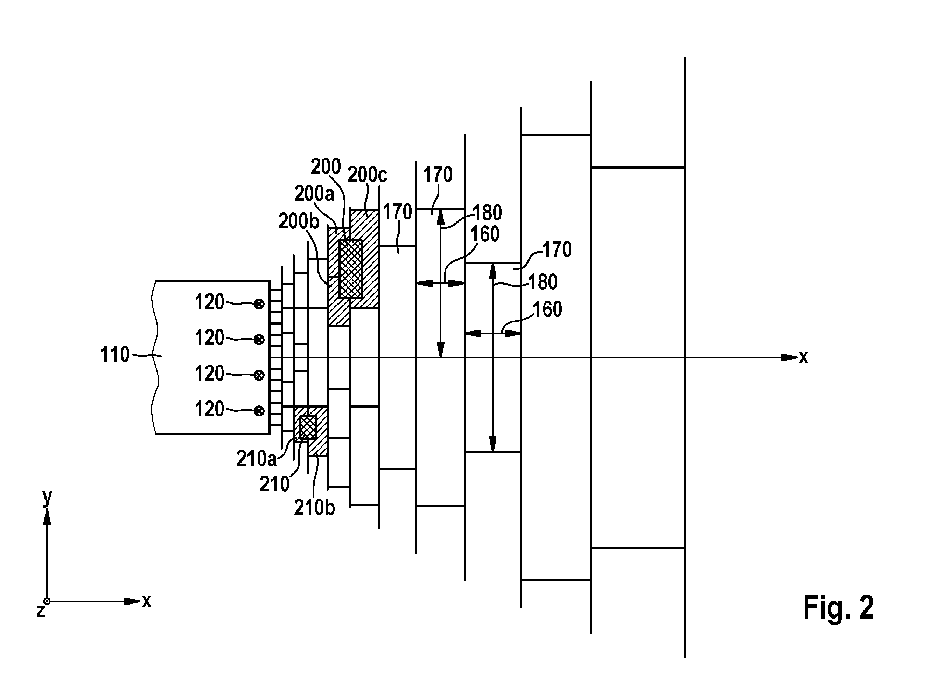

Die Figur 2 zeigt die Auflösung der Zonen relativ zum Fahrzeug 110 in Draufsicht. Wandler 120 sind an der Rückseite des Fahrzeugs angeordnet. Die Anzahl sowie die Anordnung der Wandler ist lediglich beispielhaft dargestellt. Es ergibt sich eine Auflösung in Zonen, wobei die Zonen mit zunehmenden Abstand x von den Wandlern bzw. vom Fahrzeug in ihrer Länge (in x-Richtung gemessen) und in ihrer Breite (in y-Richtung gemessen) zunehmen. Die z-Achse verläuft senkrecht zur Zeichenebene, so dass die zusätzliche dreidimensionale Auflösung aus der Figur nicht unmittelbar ersichtlich ist. Für die Figur 2 können Anordnungen wie oben beschrieben verwendet werden, insbesondere die Anordnung von Figur 1.

Es ist zu erkennen, dass mit zunehmenden Abstand x die Breite 160 der Zonen 170 zunimmt. Darüber hinaus nimmt die Länge 180 der Zonen 170 zu. Somit nimmt in Draufsicht auch die Fläche mit zunehmenden x zu, insbesondere das Volumen, wobei für die Zonengröße in z-Richtung (d.h. deren Höhe) ähnliche Größenzunahmen wie für die Länge 160 und die Breite 180 anzunehmen sind. Ferner ist zu erkennen, dass die Zonen diskret eingeteilt sind und zumindest einen Sektor der Umgebung vollständig ausfüllen. Die Zonenaufteilung unmittelbar an den Wandlern 120 kann durch die Anzahl der Wandler und deren Signalverarbeitung vorgesehen werden. Die Einteilung in Figur 2 sowie die Wandler 120 sind jedoch lediglich beispielhaft und in symbolischer Art und Weise dargestellt.

In der Figur 2 sind ferner zwei Objekte 200, 210 dargestellt, die sich jeweils auf mehrere Zonen aufteilen. Für das Objekt 200 ergeben sich Echos, die auf Objektelemente 200a-c schließen lassen. Beispielsweise sei angenommen, dass für die Zonen, in denen die Objektelemente 200a-c festgestellt wurden, eine ähnliche Dopplerverschiebung bzw. eine ähnliche Pulsdauerverkürzung oder Verlängerung aufweisen, so dass davon auszugehen ist, dass sich die einzelnen Objektelemente 200a-c mit ähnlicher Geschwindigkeit fortbewegen. Da die Objektelemente 20a-c dem selben Objekt 200 angehören, bewegen die sich tatsächlich mit exakt derselben Geschwindigkeit, jedoch ergibt sich durch die Diskretisierung und durch Messstreuungen lediglich eine Ähnlichkeit für die Bewegung, beispielsweise ein Differenz für die Dopplerverschiebung von +/- 5 %. Auf Grund dieser geringfügigen Abweichung wird angenommen, dass diese Objektelemente 200a-c dem selben Objekt 200 angehören, und werden somit vereinigt zu dem Objekt 200. In der weiteren Signalverwaltung, insbesondere in der Darstellung wird im Folgenden das Objekt 200 verwendet, anstatt der einzelnen Objekte 200a-c. Für die Objektelemente 200a-c werden zudem die zugehörigen Signalstärken ermittelt, wobei durch den größeren Abstand das Objektelement 200c eine geringere Signalstärke erzeugt, als die Objektelemente 200a-b. Daher wird dem Objektelement bzw. der Zone 200c eine geringere Schätzergüte zugeordnet, als den Objektelementen 200a,b. Die Objektelemente 200a-c werden der Einfachheit halber nicht als Elemente des Objekts 200 selbst dargestellt, sondern bereits in der diskretisierten Auflösung, wie sie in Figur 2 dargestellt ist.

In gleicher Weise werden für Objekte (210) die Objektelemente (210a,b) ermittelt, die jedoch im Wesentlichen die gleiche Dopplerverschiebung aufweisen, nämlich null. Auf Grund der Dopplerverschiebung wird darauf geschlossen, dass sich das Objekt (210) nicht relativ zum Fahrzeug (110) bewegt. Ferner werden für die Objektelemente (210a,b) ähnliche Signalstärken erfasst, da diese ungefähr den gleichen Abstand zum Fahrzeug aufweisen. Die Ähnlichkeit der physikalischen Eigenschaften (d.h. Dopplerverschiebung und Signalstärke) spiegelt sich in diesen physikalischen Eigenschaften wieder. Daher kann es zum Vergleich, ob das Objekt (210a) ähnlich ist zu dem Objekt (210b) zunächst eine erste physikalische Größe (d.h. Dopplerverschiebung) und dann eine zweite physikalische Größe (d.h. Signalstärke) verglichen werden, wobei die Vergleichsergebnisse miteinander kombiniert werden. Als dritte physikalische Eigenschaft würde sich beispielsweise die Laufzeit anbieten, wobei auf Grund der ähnlichen Nähe zu dem Wandler (120) die Objektelemente (210a,b) im Wesentlichen die gleiche Laufzeit (und somit auch die gleiche Ortsbestimmung) aufweisen. Anstatt der Dopplerverschiebung als unmittelbar zu erfassende physikalische Eigenschaft kann auch die Geschwindigkeit verwendet werden, die für die einzelnen Elemente 200a-c), (210a,b) berechnet wird, um auf Grund dieser mittelbaren (d.h. sich durch Auswertung der physikalischen Eigenschaften ergebende) physikalischen Eigenschaft die Ähnlichkeit der Eigenschaften zu überprüfen.

Aus der Figur 2 wird ferner unmittelbar klar, dass beispielsweise Objektelement 200b von Objektelement 210a zum einen anhand der unterschiedlichen Dopplerverschiebung zu unterscheiden ist (Objekt 200 und 210 weisen unterschiedliche Geschwindigkeiten auf), und zum anderen auf Grund der spezifischen Wandler 120, die die Empfangspulse erfassen, die den einzelnen Elementen zugehören. Somit können beispielsweise Objektelemente auch zu dem selben Objekt zugeordnet werden, wenn diese von dem selben Wandler (beispielsweise in Kombination mit einer ähnlichen Laufzeit) erfasst werden. Es ist so ersichtlich, dass der oberste Wandler der Rückwandler 120 die Objektelemente 200a,b beispielsweise erfasst, jedoch auf Grund der Ausrichtung nicht das Objektelement 210a. Somit lassen sich auch auf Grund der Identität der Wandler bzw. deren Ort verschiedene Objektelemente unterscheiden und unterschiedlichen Objekten zuordnen. Grundsätzlich lassen sich sämtliche oder eine Gruppe der Eigenschaften bzw. Kriterien, mit denen sich die Elemente zuordnen lassen, miteinander kombinieren, beispielsweise Gewichte kombinieren, wobei die Gewichtung von der Art der physikalischen Eigenschaft bzw. Kategorisierung abhängen kann oder von der Schätzergüte, die sich wiederum aus der Signalstärke ergibt.

## Patentansprüche

1. Verfahren zur individuellen Erfassung von Objekten (200, 210) in einer Umgebung eines Fahrzeugs (10, 110), umfassend: Absenden von mehreren Sendepulsen mittels mehrerer Wandler (20, 120) in die Umgebung; Empfangen der von der Umgebung reflektierten Sendepulse mittels der mehreren Wandler (20, 120) als Empfangspulse; und einzelne Erfassung von Objekten (200, 210) innerhalb der Umgebung anhand von Reflexionskomponenten in den Empfangspulsen, die jeweils von einem der Objekte stammen, wobei die Objekte anhand der Reflexionskomponenten von einander unterschieden werden, **dadurch gekennzeichnet, dass** das Empfangen und das Absenden mit Ausrichtungen (24a-d vorgesehen werden, die sich in Richtung einer Fahrebenenormalen (12') einer Fahrebene (12) des Fahrzeugs (10,110) unterscheiden und das Verfahren ferner umfasst: Erfassen von Objektelementen (200a-c, 210a,b) der Objekte (200, 210) in der Umgebung, wobei die Umgebung mit einer Auflösung erfasst wird, die in Richtung der Fahrebenenormalen mehrere Zonen (170) voneinander unterscheidet.

2. Verfahren nach Anspruch 1, wobei die Ausrichtungen der Wandler sich dadurch unterscheiden, dass deren jeweiligen Bezugspunkte in Richtung der Fahrebenenormalen zueinander versetzt (40) sind, dass die Ausrichtungen (24a-d der Wandler in Richtung der Fahrebenenormalen zueinander geneigt sind, oder dass die Bezugspunkte der Ausrichtungen zueinander in Richtung der Fahrebenenormalen versetzt (40) sind und die Ausrichtungen (24a-d in Richtung der Fahrebenenormalen (12') zueinander geneigt sind.

3. Verfahren nach Anspruch 1 oder 2, wobei die Sendepulse von einer Außenseite des Fahrzeugs aus gesendet werden und die Empfangspulse von der Außenseite des Fahrzeugs aus empfangen werden.

4. Verfahren nach einem der vorangehenden Ansprüche, wobei die Umgebung in drei Raumdimensionen (x, y, z) aufgelöst in mehrere dreidimensionale Zonen (170) erfasst wird, wobei eine der drei Raumdimensionen durch die Fahrebenenormale vorgesehen wird, und für jede der dreidimensionalen Zonen mindestens ein dort vorliegendes Objektelement der Objektelemente (200a-c, 210a,b), falls dort vorliegend, erfasst wird.

5. Verfahren nach einem der vorangehenden Ansprüche, wobei das Erfassen der Objektelemente der Umgebung umfasst:
Erfassen von Objektklassen der Objektelemente (200a-c, 210a,b), die die Objekte (200, 210) in unterschiedliche Objektarten einteilen, Erfassen eines Genauigkeitswerts für die Objektelemente, der die Schätzergüte wiedergibt, und
der mit einer steigenden Signalstärke des Empfangspulses ansteigt, und/oder Erfassen von physikalischen Eigenschaften der Objektelemente, wobei die physikalischen Eigenschaften
(a) unmittelbare akustische Eigenschaften sind, die sich aus dem Empfangspuls ergeben und Signalstärke des Empfangspulses, Frequenzselektivität einer Reflexion am Objektelement, Dopplerverschiebung des Empfangspulses gegenüber dem Sendepuls, Laufzeit oder Periodendauerabweichung umfassen; oder
(b) durch Eigenschaften des Objektelements vorgesehen werden, die sich durch Auswertung des Empfangspulses ergeben, und Ort, Geschwindigkeit, Beschleunigung, Bewegungsrichtung des Objektelements, sowie den zugehörigen Wandler, mit dem das Objekt erfasst wurde, Ort des Wandlers, mit dem das Objekt erfasst wurde oder Sendezeitpunkt des zugeordneten Wandlers, wenn die Sendepulse durch die mehreren Wandler sequentiell abgesendet werden, umfassen;
wobei ferner das Einteilen in Objektarten anhand der physikalischen Eigenschaften vorgesehen wird, Objektelemente mit ähnlichen physikalischen Eigenschaften in die selbe Objektklasse eingeteilt werden, und Objektelemente mit verschiedenen physikalischen Eigenschaften in unterschiedliche Objektklassen eingeteilt werden.

6. Verfahren nach einem der vorangehenden Ansprüche, wobei die mehrere Impulse innerhalb eines Zeitfensters abgesandt werden, das einer einzelnen Umgebungserfassung zugeordnet ist, wodurch bei dem Erfassen der Objektelemente die Auflösung als räumliche Auflösung vorgesehen wird, oder wobei das Absenden und Empfangen wiederholt jeweils für die mehreren Impulsen ausgeführt wird, die als eine Sequenz von Umgebungserfassungen erfasst werden, wodurch bei dem Erfassen der Objektelementen die Auflösung als räumliche und zeitliche Auflösung vorgesehen wird.

7. Verfahren nach einem der vorangehenden Ansprüche, ferner umfassend: Zuordnen der Objektelemente (200a-c, 210a,b) einzelner Zonen (170) zu einem gemeinsamen Objekt (200, 210) anhand ähnlicher Erfassungsmerkmale der Objektelemente, wobei die Erfassungsmerkmale Abstand, Richtung, Laufzeit, Periodendauerabweichung, Dopplerverschiebung, Bewegungsverlauf, Geschwindigkeit, Beschleunigung, Bewegungsrichtung, zugehöriger Wandler (120), mit dem die Objektelemente erfasst wurden, Sendezeitpunkt, dem bei sequentiellem Absenden der Sendepulse durch die mehreren Wandler ein bestimmter Wandler oder Wandlerort zugeordnet ist, oder Objektklassifizierung wiedergeben, wobei die Zuordnung durch Schwellwertvergleich, Korrelieren oder gemeinsame Zugehörigkeit oder Ähnlichkeit zu einem vordefiniertem Muster einer Objektart vorgesehen wird.

8. Verfahren nach einem der vorangehenden Ansprüche, wobei die Auflösung (160, 180) nicht konstant ist und sich mit dem Abstand zum Fahrzeug verkleinert, wobei die Zonen in ihrer Größe mit zunehmenden Abstand zum Fahrzeug zunehmen, oder wobei ein Fahrkorridor anhand von Verkehrsmaßnahmen oder anhand der Objekte geschätzt wird, der Randbereiche aufweist, in denen die Auflösung größer und die Zonen kleiner sind als in Innen- oder Außenbereichen des Fahrkorridor, wobei der Fahrkorridor in zwei oder in drei Raumdimensionen definiert ist.

9. Anordnung von Wandlern (20a-d, 120), die zur Abgabe und zum Empfang von Ultraschallpulsen eingerichtet sind, wobei die Anordnung zur Befestigung an ein Fahrzeug (10) mit einer Fahrebene (12) vorgesehen ist, **dadurch gekennzeichnet, dass** die Wandler aufgrund der Anordnung Sende- und Empfangsausrichtungen aufweisen, die sich in Richtung einer Fahrebenenormalen der Fahrebene (12) unterscheiden.

10. Anordnung nach Anspruch 9, wobei die Wandler durch die Anordnung in Richtung der Fahrebenenormalen (12') zueinander versetzt (40) sind, oder die Wandler durch die Anordnung mit unterschiedlichen Ausrichtungswinkeln (24a-d zur Fahrebenenormalen geneigt sind, oder sowohl in Richtung (40) der Fahrebenenormalen zueinander versetzt als auch mit unterschiedlichen Ausrichtungswinkeln (24a-d, 26a,b) zur Fahrebenenormalen geneigt sind.
